# EUROPÄISCHE PATENTSCHRIFT

(11) **EP 2 465 814 B1**
(45) Veröffentlichungstag und Bekanntmachung des Hinweises auf die Patenterteilung: **17.02.2016**
(21) Anmeldenummer: 11193887.4
(22) Anmeldetag: 15.12.2011
(51) Int. Cl.: B65G 47/84, B65G 47/244, B67C 7/00

(54) **Vorrichtung zum Herstellen von Kunststoffbehältnissen**
Device for producing plastic containers
Dispositif de fabrication de récipients en plastique

(30) Priorität: 16.12.2010 DE 102010054792
(43) Veröffentlichungstag der Anmeldung: 20.06.2012
(73) Patentinhaber: Krones AG, 93073 Neutraubling (DE)
(72) Erfinder: Klarl, Hermann, 93073 Neutraubling (DE); Roithmeier, Stefan, 93073 Neutraubling (DE); Blochmann, Erik, 93073 Neutraubling (DE); Glötzl, Reiner, 93073 Neutraubling (DE); Beulshausen, Sebastian, 93073 Neutraubling (DE)
(74) Vertreter: Bittner, Bernhard

(56) Entgegenhaltungen:
- WO-A1-01/66445
- DE-A1- 3 239 541
- DE-A1- 19 819 731
- DE-U1- 29 617 281
- GB-A- 927 146
- GB-A- 2 075 943
- US-A- 2 689 057
- US-B1- 6 279 722

## Beschreibung

Der vorliegenden Erfindung liegt die Aufgabe zugrunde, die Herstellung von Behältnissen mit nicht kreisförmigem Querschnitt, beispielsweise ovalen Behältnissen, zu vereinfachen. Dabei soll insbesondere auch das Verschließen und Etikettieren der Behältnisse erleichtert werden.

Die vorliegende Erfindung bezieht sich auf eine Vorrichtung und ein Verfahren zum Herstellen von Kunststoffbehältnissen mit nicht kreisförmigem Querschnitt. Derartige Vorrichtungen und Verfahren sind aus dem Stand der Technik seit langem bekannt. Dabei ist es unter anderem bekannt, dass bei derartigen Herstellungsverfahren Kunststoffbehältnisse hergestellt werden, indem erwärmte Kunststoffvorformlinge durch Druckbeaufschlagung zu den Kunststoffbehältnissen umgeformt werden. Anschließend werden diese Behältnisse mit Flüssigkeiten, insbesondere Getränken befüllt und schließlich verschlossen. Dabei sind dem Stand der Technik auch solche Behältnisse bekannt, welche keinen kreisförmigen Querschnitt aufweisen, sondern hiervon abweisende Querschnitte wie beispielsweise elliptische Querschnitte. Bei der Herstellung dieser Querschnitte werden spezielle Blasmaschinen vorgesehen, die entsprechend elliptisch ausgebildete Blasformen aufweisen. Bei der Etikettierung und Befüllung bereiten jedoch derartige Behältnisse, welche einen nicht kreisförmigen Querschnitt aufweisen, gelegentlich Probleme, da die Füll- und Etikettiermaschinen eine exakte Ausrichtung dieser Behältnisse erfordern.

Die WO 2010/013207 A2 beschreibt eine Anlage zum Blasformen von Kunststoffbehältnissen und insbesondere Flaschen. Diese Anlage weist dabei eine Vielzahl von auswechselbaren Blasformen auf, die jeweils Hohlräume zum Formen der Behälter ausbilden.

Aus der WO 01/66445 ist eine Vorrichtung nach dem Oberbegriff des Anspruchs 1 bekannt. Die US 6,279,722 B1 beschreibt einen Drehorientierer zum Positionieren von Artikeln so, dass ein Merkmal jedes Artikels in der gleichen vorbestimmten Richtung liegt.

Diese Aufgabe wird durch eine Vorrichtung zum Herstellen von Getränkebehältnissen nach Anspruch 1 gelöst.

Damit bewirkt die Ausrichtungseinrichtung eine Drehung der Kunststoffbehältnisse bezüglich ihrer Längsrichtung.

Bei der Umformungseinrichtung handelt es sich vorteilhaft um eine Blasmaschine und insbesondere um eine Streckblasmaschine, welche die Kunststoffvorformlinge durch Beaufschlagung mit einem gasförmigem Medium, insbesondere mit Luft, expandiert. Dabei erzeugt diese Umformungseinrichtung Behältnisse, die über einen nicht kreisförmigem Grundkörper, beispielsweise einen elliptischen oder rechteckigen Grundkörper verfügen.

Die Umformungseinrichtung kann jedoch üblicherweise die Behältnisse nur mit einer Winkelgenauigkeit von +/- 10 ° an diese nachgeordneten Einrichtungen wie beispielsweise einem Transportrad im Auslauf übergeben.

Eine Transporteinrichtung ist vorgesehen, welche die Kunststoffbehältnisse von der Umformungseinrichtung zu der Ausrichtungseinrichtung und bevorzugt auch durch die Ausrichtungseinrichtung hindurch transportiert. Dabei weist diese Transporteinrichtung eine Vielzahl von Greifelementen auf, welche die Behältnisse greifen, beispielsweise unterhalb ihres Tragrings.

Diese Greifelemente weisen dabei innerhalb dieser Transporteinrichtung einen konstanten Abstand zueinander beziehungsweise eine konstante Teilung auf. Es wäre weiterhin auch möglich, dass die Teilung der Kunststoffbehältnisse sowohl in der Umformungseinrichtung als auch in der nachfolgenden Transporteinrichtung konstant gehalten wird. Besonders bevorzugt wird diese Teilung auch in einer nachfolgenden Füll- oder Etikettiereinrichtung aufrecht erhalten.

Bei einer vorteilhaften Ausführungsform richtet die Ausrichtungseinrichtung die Kunststoffbehältnisse derart aus, dass diese nach Verlassen der Ausrichteinrichtung jeweils in der gleichen Stellung bezüglich ihrer Längsachse ausgerichtet sind. Dies bedeutet, dass die einzelnen Kunststoffbehältnisse vorteilhaft im Wesentlichen mit einer einheitlichen Drehstellung in das nächste Aggregat, beispielsweise eine Fülleinrichtung oder eine Etikettiereinrichtung einlaufen. Bei einer weiteren vorteilhaften Ausführungsform ist die Ausrichtungseinrichtung zumindest teilweise stationär gegenüber dem Transportpfad der Behältnisse angeordnet. So wäre es möglich, dass die Ausrichtungseinrichtung stationär angeordnet ist und die entlang des Transportpfades geführten Behältnisse durch diese Einrichtung hindurch geführt werden.

In einer erfindungsgemäßen Ausführungsform weist die Ausrichtungseinrichtung eine Dreheinrichtung auf, welche die Kunststoffbehältnisse jeweils um einen vorgegebenen Drehwinkel bezüglich ihrer Längsachse dreht. Dabei ist es möglich, dass die Kunststoffbehältnisse zunächst an die besagte Dreheinrichtung übergeben und von dieser jeweils in einem einheitlichen Winkel gedreht werden.

Erfindungsggemäß weist die Ausrichtungseinrichtung eine Ausrichteinheit auf, welche in der Transportrichtung der Kunststoffbehältnisse nach der Dreheinrichtung angeordnet ist und welche die Kunststoffbehältnisse wenigstens teilweise bezüglich ihrer Längsrichtung dreht. Damit werden bevorzugt die Kunststoffbehältnisse zunächst einheitlich durch die Dreheinrichtung gedreht und anschließend in der nachfolgenden Ausrichteinheit bezüglich ihrer Längsrichtung ausgerichtet. Damit ist die Ausrichtungseinrichtung in ihrer Gesamtheit zweitteilig ausgebildet und weist zunächst die besagte Dreheinrichtung und anschließend die Ausrichteinheit auf.

Dabei werden die Kunststoffbehältnisse vor und auch während dieser Ausrichtung mittels Greifelementen transportiert, wobei diese Greifelemente eine Relativdrehung dieser Behältnisse bezüglich den Greifelementen (und bezüglich der Längsachse der Behältnisse) erlauben. Bei diesen Greifelementen handelt es sich dabei um steuerbare Greifelemente, deren Öffnungs- und Schließstellung steuerbar ist. Vorteilhaft greifen die Greifelemente die Kunststoffbehältnisse unterhalb eines Tragrings während diese bezüglich ihrer Längsrichtung ausgerichtet werden. Es wäre auch möglich, dass die Greifelemente die Kunststoffbehältnisse während der Umdrehung oberhalb ihres Tragrings greifen.

Erfindungsgemäß weist die Ausrichtungseinrichtung ein erstes Kontaktierungselement zum Ausrichten der Kunststoffbehältnisse auf, wobei dieses erste Kontaktierungselement die Kunststoffbehältnisse zu deren Ausrichtung an deren Außenoberfläche kontaktiert. Durch den Kontakt mit diesem Kontaktierungselement werden die Kunststoffbehältnisse bezüglich ihrer Längsachse gedreht und auf diese Weise ausgerichtet. Bevorzugt kontaktiert das Kontaktierungselement die Kunststoffbehältnisse an deren Grundkörper, d.h. einem unterhalb der Mündung und oberhalb des Bodens des Kunststoffbehältnisses liegenden Bereich. Dieser Bereich ist dabei vorteilhaft nicht rotationssymmetrisch, beispielsweise oval oder rechteckig ausgebildet, sodass durch den Kontakt mit dem Kontaktierungselement die Drehung der Kunststoffbehältnisse bezüglich deren Längsrichtung erfolgt. Vorzugsweise sind die Greifelemente zum Halten der Behältnisse in der Längsrichtung der Behältnisse versetzt zu den Kontaktierungselementen angeordnet und besonders bevorzugt höher als die Kontaktierungselemente angeordnet.

Bei einer weiteren vorteilhaften Ausführungsform weist die Ausrichtungseinrichtung ein zweites Kontaktierungselement auf, und der Transportpfad (der Behältnisse) verläuft zwischen dem ersten Kontaktierungselement und dem zweiten Kontaktierungselement. So ist es beispielsweise möglich, dass die Kunststoffbehältnisse bei Durchlaufen dieser Kontaktierungselemente hinsichtlich ihrer Drehstellung ausgerichtet werden. Dabei können beispielsweise die Kontaktierungselemente zueinander einen Abstand aufweisen, der im Wesentlichen der kürzeren Seite der Kunststoffbehältnisse beziehungsweise deren Grundkörper entspricht um auf diese Weise eine Ausrichtung zu erreichen.

Vorteilhaft erstreckt sich dabei wenigstens ein Kontaktierungselement entlang eines vorgegebenen Abschnittes des Transportpfades (beziehungsweise parallel hierzu). Dabei wäre es möglich, dass das Kontaktierungselement schienenartig ausgeführt ist. Falls zwei Kontaktierungselemente vorgesehen sind, können diese beide schienenartig ausbildet sein und sich gegenüber stehen.

Bei einer weiteren vorteilhaften Ausführungsform ist wenigstens ein Kontaktierungselement in einer senkrecht zu dem Transportpfad stehenden Richtung beweglich. Auf diese Weise kann erreicht werden, dass bei beispielsweise falsch orientierten Behältnissen diese nicht kollidieren oder durch die Kontaktierungselemente zerstört werden, sondern entsprechende Kontaktierungselemente nachgeben und in diesem Falle auch ein Kunststoffbehältnis mit Querstellung durch die Ausrichteinrichtung befördert wird. Vorteilhaft ist dabei das wenigstens eine Kontaktierungselement mittels eines Vorspannelementes in Richtung des Transportpfades vorgespannt. Auch durch diese Vorspannung kann dabei eine weitgehend exakte Ausrichtung der Kunststoffbehältnisse erreicht werden.

Bei einer weiteren vorteilhaften Ausführungsform verringert sich ein Abstand zwischen den Kontaktierungselementen oder ein Abstand zwischen einem Kontaktierungselement und dem Transportpfad in der Transportrichtung der Kunststoffbehältnisse wenigstens abschnittsweise. So können Einführschrägen oder Einführkrümmungen vorgesehen sein, durch welche bewirkt wird, dass Behältnisse mit einer Fehlstellung von beispielsweise 10° zwischen den beiden Kontaktierungselementen eingeführt werden können. Bevorzugt handelt es sich hierbei bei den beschriebenen Ausführungsformen um eine mechanisch arbeitende Ausrichteinrichtung, welche insbesondere durch Kontakt mit den Behältnissen diese hinsichtlich ihrer Drehstellung ausrichtet.

Bei einer weiteren vorteilhaften Ausführungsform weist die Vorrichtung eine Ausschleuseinrichtung zum Ausschleusen von Behältnissen auf und diese Ausschleuseinrichtung ist zwischen der Umformungseinrichtung und dem nachgeordneten Aggregat wie einer Fülleinrichtung oder einer Etikettiereinrichtung angeordnet. Damit wäre es sowohl möglich, dass zunächst eine Fülleinrichtung die Behältnisse befüllt und anschließend eine Etikettiereinrichtung die Behältnisse etikettiert als auch umgekehrt zunächst ein Etikettieren mittels einer Etikettiereinrichtung erfolgt und anschließend eine Befüllung mittels der Fülleinrichtung.

Die vorliegende Erfindung ist weiterhin auf ein Verfahren zum Herstellen von Kunststoffbehältnissen mit nicht kreisförmigem Querschnitt nach Anspruch 6 gerichtet, wobei Kunststoffvorformlinge mittels einer Umformungseinrichtung zu Kunststoffbehältnissen umgeformt werden und hierzu die Kunststoffvorformlinge vereinzelt einer Vielzahl von Blasstationen zugeführt werden und wobei die vorgefertigten Kunststoffbehältnisse mittels wenigstens einer Transporteinrichtung vereinzelt in Richtung einer Fülleinrichtung transportiert werden, um von dieser Fülleinrichtung mit einem fließfähigem Medium befüllt zu werden. Erfindungsgemäß werden die Kunststoffbehältnisse nach Verlassen der Blasstationen hinsichtlich einer Drehstellung um deren Längsachse ausgerichtet. Vorteilhaft werden dabei die Kunststoffbehältnisse vereinzelt beziehungsweise individuell hinsichtlich ihrer Drehstellung ausgerichtet.

Bei der Umformungseinrichtung handelt es sich vorteilhaft um eine Streckblasmaschine, welche die Kunststoffvorformlinge durch Beaufschlagung mit Luft sowie mittels einer Reckstange expandiert. Hierbei ist es auch möglich, dass die Kunststoffbehältnisse zunächst zu einer Etikettierstation transportiert und erst anschließend zu der Füllstation verbracht werden. Dabei ist es möglich, dass das Ausrichten der Kunststoffbehältnisse unmittelbar nach Verlassen der Blasstation erfolgt, es wäre jedoch auch möglich, dass die Ausrichtung erst nach einer Etikettiermaschine erfolgt.

Weitere Vorteile und Ausführungsformen ergeben sich aus den beigefügten Zeichnungen:
Hierbei zeigen:
   - Fig. 1: eine schematische Gesamtdarstellung einer erfindungsgemäßen Vorrichtung zum Herstellen von Getränkebehältnissen;
   - Fig. 2: eine Detailansicht der in Fig. 1. gezeichneten Anlage;
   - Fig. 3: eine weitere Darstellung eines Teils der erfindungsgemäßen Vorrichtung;
   - Fig. 4: eine erfindungsgemäße Vorrichtung in einer weiteren Ausführungsform;
   - Fig. 5a-5d: vier Teildarstellungen der in Fig. 4 gezeigten Vorrichtung.

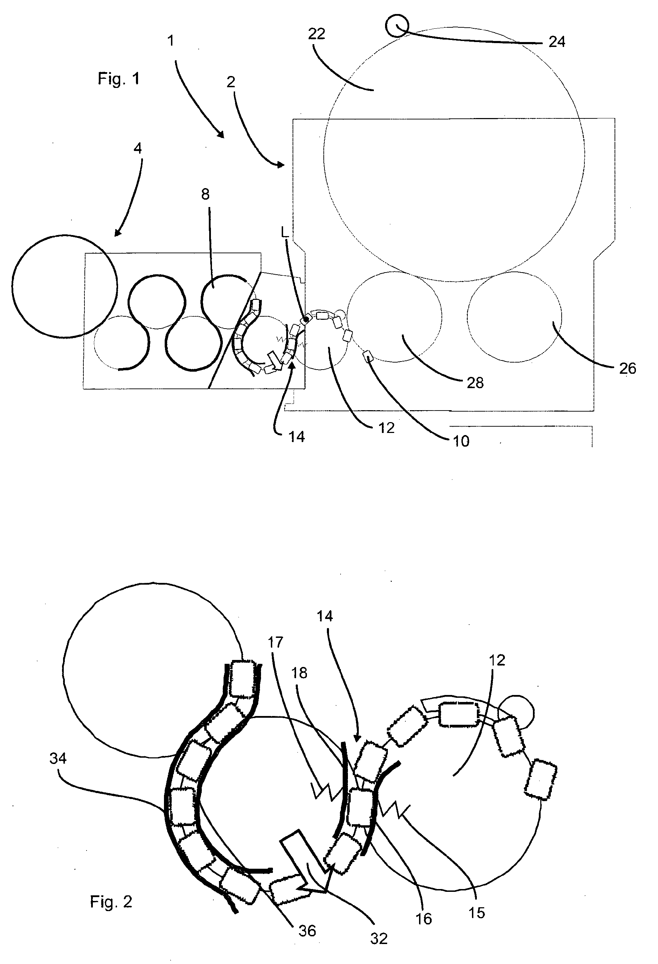

Fig. 1 zeigt eine Vorrichtung 1 zum Herstellen von Getränkebehältnissen. Diese Vorrichtung 1 weist dabei eine Umformungseinrichtung 2 auf, die zum Umformen von Kunststoffvorformlingen zu Kunststoffbehältnissen 10 dient. Diese Umformungseinrichtung weist dabei eine Vielzahl von Blasstationen 24 auf, die beispielsweise an einem Blasrad 22 angeordnet sein können. Kunststoffvorformlinge werden dabei während des Transports mit diesem Blasrad insbesondere durch Aufschlagung mit Druckluft zu Kunststoffbehältnissen umgeformt.

Das Bezugszeichen 26 bezieht sich dabei auf einen Einlaufstern, der die Kunststoffvorformlinge dem Blasrad 22 zuführt und das Bezugszeichen 28 kennzeichnet einen Auslaufstern, der die so gefertigten Kunststoffbehältnisse übernimmt. Dabei können in der Regel die gefertigten Behältnisse nur mit einer Genauigkeit von +/- 10° an den Auslauf- beziehungsweise Auslaufstern 28 übergeben werden. Diesem Auslaufstern schließt sich eine Dreheinrichtung 12 an, die hier Bestandteil der Ausrichteinrichtung 12,14 ist. Diese Dreheinrichtung beziehungsweise Orientierungseinrichtung dreht dabei alle Behältnisse um jeweils die gleiche Gradzahl. Die Drehung erfolgt dabei bezüglich einer Längsrichtung L der Behältnisse, die in Fig. 1 senkrecht zu der Figurenebene steht. Diese Richtung L ist dabei auch die Längsrichtung der Behältnisse.

An die Dreheinrichtung 12 schließt sich eine Ausrichteinheit 14 an, welche die Behältnisse durch Drehung bezüglich deren Längsachse L derart ausrichtet, dass diese jeweils die gleiche Ausrichtung aufweisen. Genauer gesagt werden die Kunststoffbehältnisse an der Übergabe nach der Dreheinrichtung geführt und in die richtige Position gedreht.

Im Anschluss an die Ausrichteinheit 12, 14 können die Kunststoffbehältnisse an eine Einrichtung 8 zur Bodenkühlung übergeben werden. Schließlich können die Behältnisse an die Fülleinrichtung 4 (nur schematisch dargestellt) überführt werden. Es könnte jedoch vor der Fülleinrichtung 4 auch noch die Etikettiereinrichtung vorgesehen sein.

Fig. 2 zeigt eine Detaildarstellung der in Fig. 1 gezeigten Anordnung, genauer den Bereich der Dreheinrichtung 12 und der Ausrichteinheit 14. Die von der Dreheinrichtung 12 jeweils um einen bestimmten Winkel gedrehten Behältnisse laufen zwischen zwei Kontaktierungselementen 16 und 18 ein, welche den Körper der Behältnisse kontaktieren und diese so hinsichtlich ihrer Drehstellung ausrichten. Dabei sind die beiden Kontaktierungselemente 16 und 18, die hier schienenartig ausgeführt sind, mittels Federungseinrichtungen 15 und 17 vorgespannt.

Bei Fehlstellung eines Behältnisses kann das jeweilige Kontaktierungselement beziehungsweise können beide Kontaktierungselemente 16 und 18 nachgeben. Weiterhin ist eine (nicht gezeigte) Erkennungseinrichtung vorgesehen, die eine bestimmte Auslenkung der Kontaktierungselemente 16 und 18 beziehungsweise eine Fehlstellung der Behältnisse 10 erkennt. In Reaktion auf eine derartig erkannte Fehlstellung kann mittels einer Ausschleuseinrichtung 32 (nur schematisch dargestellt) das betreffende Behältnis ausgeschleust werden. Die nicht ausgeschleusten Behältnisse werden zwischen zwei weiteren Schienenelementen 34 und 36 geführt, sodass sie eine exakt definierte Drehstellung aufweisen. Vorteilhaft werden dabei die Behältnisse jeweils an ihren Halsbereichen geführt, sind jedoch drehbar gegenüber ihren Greifelementen beziehungsweise Führungen angeordnet sodass eine Verdrehung bezüglich der Greifelemente möglich ist.

Der in Fig. 1. gezeigte Auslaufstern 28 kann dabei auch als Teilungsverzugsstern ausgeführt sein, wobei diesem Auslaufstern 28 der Drehstern 12 folgt, der, wie oben erwähnt die Behältnisse um einen bestimmten Winkel dreht. Für den Fall, dass ein Kunststoffbehältnis in der Blasform hängen bleibt oder in Notstoppsituationen können die Behältnisse auch in einem undefinierten Winkel ankommen. Um dann einen Zusammenstoß zu vermeiden, ist folgender Ablauf denkbar.

Die Ausrichteinheit 14 übernimmt die Behältnisse von der Dreheinrichtung 12 mit einer Genauigkeit von +/- 10°. An dem entsprechenden Stern kann ein Rumpfstern vorgesehen sein, der eine maximale Kontur aufweist, welche der Flaschendiagonale entspricht. Flaschen, die mit mehr als 10° (entspricht 7,5 mm) verdreht sind, werden direkt nach dem Übergabepunkt (bei bereits geschlossener Klammer) von einer Sensoreinrichtung sowie einem Schalter (z.B. Stangenschalter) erkannt und öffnen die Greifelemente. Die so ausgeschiedenen Behältnisse können beispielsweise über eine Rutsche und auch eine Öffnung nach außen entsorgt werden. Im Falle eines Notstopps können die Behältnisse undefiniert übergeben werden. Deshalb wird im Falle eines Notstopps sofort die Ausscheidung aktiviert und die Behältnisse werden bis zum Stillstand ausgeschieden. Die Ausscheidung der Behältnisse kann dabei mit einer zusätzlichen Federungseinrichtung, z.B. einer Blattfeder an der Mündung unterstützt werden.

Auch an die Ausrichteinheit 14 werden die Behältnisse mit einer Genauigkeit von +/- 10° weitergegeben. Die Kontaktierungselemente16 und 18 können dabei Flaschenkonturen mit +/-10° aufnehmen. Man erkennt, dass das Kontaktierungselement 16 trichterförmig geöffnet ist, sodass er am Anfang einen größeren Radius (entsprechend den +/- 10° + Einfädelschräge) ermöglicht. Zum Ende des Bogens 16 hin verjüngt sich der Radius beziehungsweise der Abstand zwischen den Kontaktierungselementen 16 und 18 auf ca. ein Spiel von 1 mm. Es wäre hier auch denkbar, dass nur ein Kontaktierungselement vorgesehen ist, welches sich trichterförmig auf den Transportpfad der Behältnisse zu bewegt.

Ab dem Stern 8 entsprechen die Sterntasche und der Bogenradius dem üblichen Ablauf einer Behältniskontur.

Der Klammerradius der Ausrichteinheit 14 beziehungsweise des betreffenden Transportsterns ist so locker ausgelegt, dass das Behältnis in der geschlossenen Klammer drehbar bleibt. Vorteilhaft handelt es sich bei dem Transportstern der Ausrichteinheit 14 um einen unten greifenden Transferstern, d.h. einem Transferstern, der das Behältnis unterhalb seines Tragrings greift. Bei der Dreheinrichtung 12 handelt es sich vorteilhaft um einen oben greifenden Drehstern, d.h. um einen Drehstern, der das Behältnis oberhalb seines Tragrings greift.

Vorteilhaft ist ein Schott an der Übergabe vorgesehen, welches für den Ausrichtstern 12 angepasst ist. Entsprechend kann auch die Einbausituation für die Schalteinrichtung (z.B. des Stangschalters) berücksichtigt werden.

Im weiteren Verlauf ist an dem Füllerkarussell ein Führungsbogen vorgesehen, der speziell beim Einlauf so lang ausgelegt ist, bis das Behältnis angefüllt ist beziehungsweise der Boden des Behältnisses komplett mit einem Füllprodukt bedeckt ist. Im Füllerkarussell können zusätzlich Rumpftaschen in der Behältniskontur vorgesehen sein, die ein Verdrehen der Behältnisse verhindern.

Zwischen dem ersten und zweiten Transferstern kann eine Trennwand eingezogen sein und die erwähnte Bodenkühlung kann auch im zweiten Transferstern beginnen.

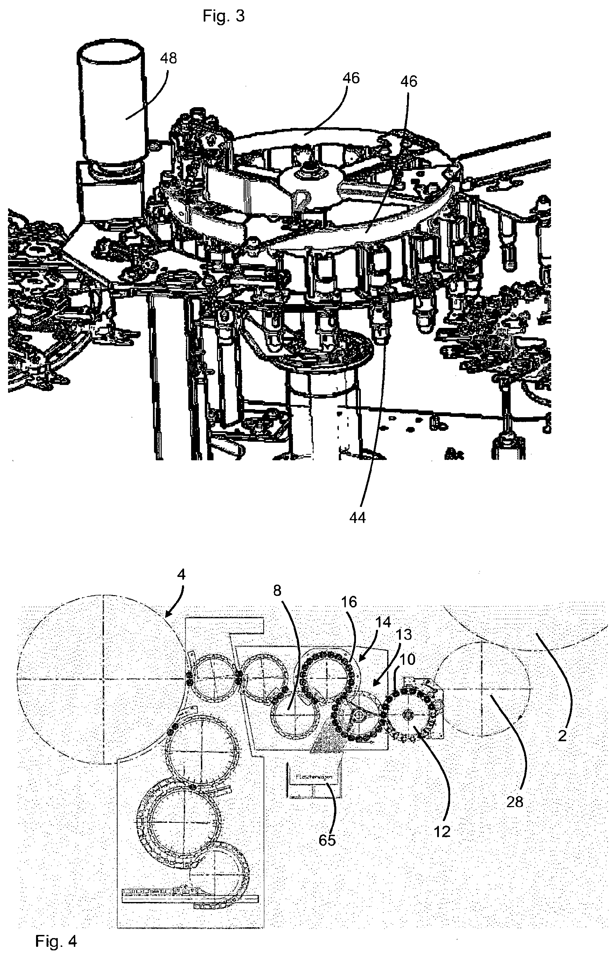

Fig. 3 zeigt eine weitere Darstellung der Dreheinheit 12. Man erkennt, dass die Vorrichtung eine Vielzahl von Haltedornen 44 aufweist, welche in Mündungen der Behältnisse eingreifen und diese so führen können. Daneben ist ein Riemen 46 vorgesehen, der den Haltedorn 44 in Drehung versetzen kann und damit alle Kunststoffbehältnisse am einem bestimmten Winkel dreht. Im Anschluss hieran werden die Behältnisse an den nächsten Stern übergeben. Das Bezugszeichen 48 kennzeichnet eine Antriebseinrichtung zum Antreiben des Riemens 46. Die individuelle Drehung der Behältnisse könnte hier auch mittels Servomotoren durchgeführt werden.

Fig. 4 zeigt eine weitere Ausführungsform einer erfindungsgemäßen Vorrichtung zum Herstellen von Behältnissen. Dabei ist bei dieser Ausführungsform lediglich ein Kontaktierungselement 16 vorgesehen und die Ausrichteinheit 14, welche dieses Kontaktierungselement 16 aufweist ist nicht, wie bei den vorangegangenen Ausführungsformen, direkt im Anschluss an die Dreheinrichtung 12 angeordnet. Die Behältnisse werden hier ebenfalls, wie in den vorangegangenen Ausführungsformen dargestellt, ausgehend von der Umformungseinrichtung über den Auslaufstern 28 an die Dreheinrichtung 12 übergeben, in der sie jeweils einheitlich um einen vorgegebenen Drehwinkel gedreht werden. Anschließend werden die Behältnisse über ein Transportrad 13 transportiert, welches steuerbare Greifelemente für die Behältnisse aufweist, sodass diese ausgeschleust werden können.

Im Anschluss an diesen Vorgang schließt sich die Ausrichteinheit 14 an, mit der die Behältnisse bezüglich ihrer Drehstellung ausgerichtet werden. Im Anschluss hieran kann sich wiederum eine Bodenkühleinheit 8 anschließen.

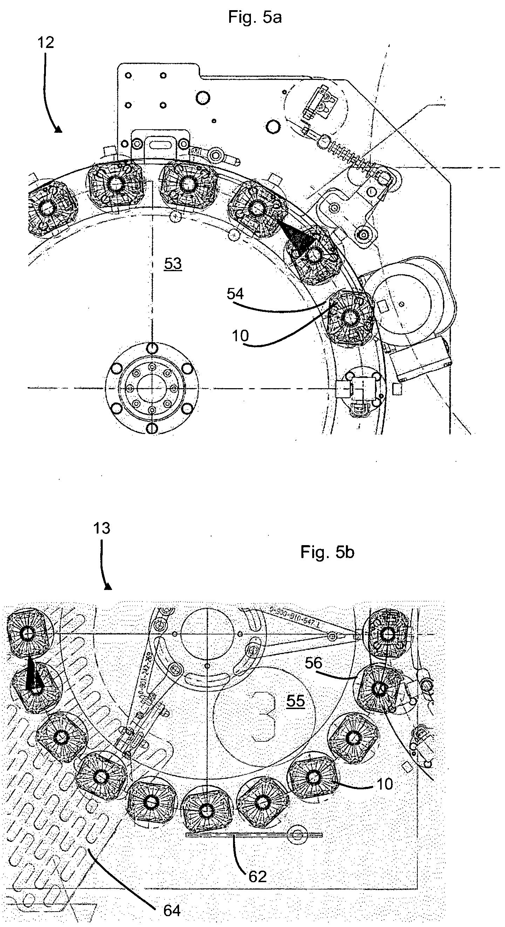

Fig. 5a zeigt eine Teildarstellung, genauer gesagt die Dreheinrichtung 12. Die Kunststoffbehältnisse werden an diese Dreheinrichtung 12 übergeben und anschließend jeweils um einen einheitlichen Drehwinkel gedreht. Man erkennt, dass die Dreheinrichtung einen Rumpfstern 53 mit Ausnehmungen 54 aufweist, wobei diese Ausnehmungen hier im Wesentlichen den Durchmesser der Diagonale der Behältnisse aufweisen, sodass die Behältnisse mit relativ wenig Spiel gegenüber diesen Ausnehmungen 54 gedreht werden können. Auf diese Weise wird verhindert, dass die Behältnisse 10 während dieses Drehvorgangs schwanken können.

Fig. 5b zeigt eine Detaildarstellung eines sich an eine Dreheinrichtung anschließenden Ausschleussterns 13. Auch dieser Ausschleusstern weist einen Rumpfstern 55 mit Ausnehmungen 56 auf, die wiederum an dem Außenstern der Behältnisse angepasst sind. Das Bezugszeichen 62 kennzeichnet ein mechanisches Schaltelement, welches zur Überprüfung der Ausrichtung der Kunststoffbehältnisse 10 dient. Falls Kunststoffbehältnisse zu stark verdreht sind, werden auf diese Weise Bewegungen dieser Einrichtung beziehungsweise Schalteinrichtung 62 aufgelöst und in Reaktion auf diese Schaltbewegung können die Greifelemente oberhalb einer Rutscheinrichtung 64 geöffnet werden, sodass die Behältnisse auf diese Rutscheinrichtung 64 fallen und aus dem Strom gelangen. Genauer gesagt können die Behältnisse in einen Flaschenwagen 65 (vgl. auch Fig. 4) gelangen und von dort abtransportiert werden.

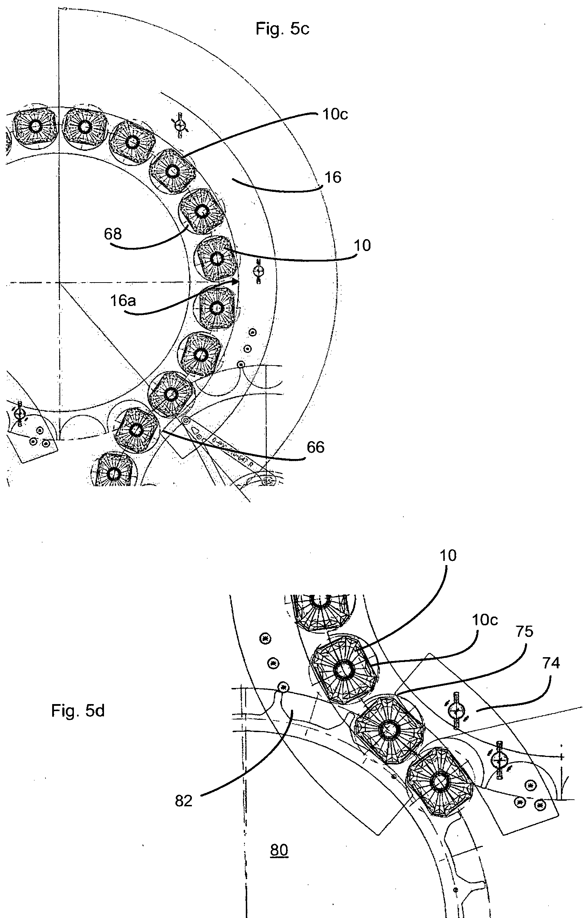

Fig. 5c zeigt wiederum in einer vergrößerten Darstellung die Ausrichteinheit 14. Diese weist hier lediglich ein Kontaktierungselement 16 auf, welches die Außenwandung der Kunststoffbehältnisse kontaktiert um diese in ihrer Drehstellung bzgl. deren Längsrichtung auszurichten. Dieses Kontaktierungselement 16 weist wiederum einen Einführbereich 66 auf, der dazu dient, um die Behältnisse 10 einzufädeln. Im Anschluss daran verringert sich der Abstand zwischen der Innenwandung 16a des Kontaktierungselements und dem Transportpfad P der Kunststoffbehältnisse, vorzugsweise kontinuierlich bis diese über ihre längere Seite 10c transportiert bzw. geführt werden. Auch diese Ausrichteinheit 14 weist hier eine Vielzahl von Ausnehmungen 68 auf, die wiederum an diagonale Behältnisse angepasst sind, sodass die Behältnisse 10 gegenüber diesen Ausnehmungen 68 gedreht werden. Nach Verlassen der Ausrichteinheit 14 sind die Kunststoffverhältnisse in der vorbestimmten Weise ausgerichtet, um zum Aggregat gelangen zu können.

Im Gegensatz zu den oben veranschaulichten Ausführungsformen ist hier kein zweites Kontaktierungselement vorgesehen sondern die Ausrichtung der Kunststoffbehältnisse erfolgt nur über das äußerste Kontaktierungselement 16.

Es wäre jedoch auch möglich, anstelle des hier radial außen liegenden Kontaktierungselements hier lediglich ein radial innen liegendes Kontaktierungselement vorzusehen. Auch könnten wie in den vorangegangenen Ausführungsformen sowohl ein äußeres als auch ein inneres Kontaktierungselement vorgesehen sein. Weiterhin wäre es auch möglich, dass das Kontaktierungselement 16, wie in den vorangegangenen Ausführungsformen federnd gelagert ist. Vorteilhaft weist dieses Kontaktierungselement 16 eine Beschichtung auf, welche einen zu starken Abrieb oder eine Beschädigung der Kunststoffbehältnisse vermeidet.

Fig. 5d zeigt einen Übergangsbereich zwischen der Ausrichteinheit 14 und dem nächsten Aggregat 8. Man erkennt, dass hier auch ein Führungselement 74 mit einer Einführschräge 75 vorgesehen ist, welches sich entlang des Transportpfades P geringfügig mit dem Kontaktierungselement 16 überschneidet, sodass die Behältnisse über einen kurzen Wegabschnitt von dem ersten Kontaktierungselement 16 und auch dem Führungselement 74 geführt werden. Das Aggregat 8 weist wiederum einen Rumpfstern 80 auf, wobei dieser Rumpfstern 80 wiederum Ausnehmungen 82 aufweist, die jedoch im Gegensatz zu den vorangegangenen Ausnehmungen derart gestaltet sind, dass sich die Kunststoffbehältnisse diesen gegenüber nicht drehen können. Mit anderen Worten ist die Ausnehmung 82 hier zumindest teilweise und bevorzugt vollständig an eine Außenkontur der Behältnisse angepasst. Damit erfolgt bevorzugt ab dieser Position entlang des Transportpfades ein orientierter Transport der Behältnisse über Formsterne. Die Ausrichteinheit 14 nimmt noch die Aufgabe einer Endorientierung der Kunststoffbehältnisse wahr.

Die gesamte Ausrichteinrichtung könnte jedoch auch in anderer Weise ausgebildet sein. So könnten die Behältnisse mittels Greifeinrichtungen wie etwa den Haltedornen 44 transportiert werden und eine Drehstellungserfassungseinrichtung könnte eine Drehstellung der Behältnisse bezüglich deren Längsachse erfassen. In Reaktion auf die so erfasste Drehstellung könnten Servomotoren die Behältnisse jeweils in die richtige Drehstellung ausrichten. In diesem Falle wären an einem Trägerrad eine Vielzahl von Servomotoren, die unabhängig steuerbar sind, angeordnet sowie die erwähnte Erfassungseinrichtung, welche die Drehstellung der Kunststoffbehältnisse erfasst. Dabei könnte eine derartige Erfassungseinrichtung beispielsweise unterhalb der Behältnisse angeordnet sein und jeweils ein Bild der Behältnisse aufnehmen. Während des Transportes der Behältnisse mit dem besagten Transportrad könnte damit auch die Ausrichtung bezüglich der Längsrichtung der Behältnisse erfolgen.

### Bezugszeichenliste

- 1: Vorrichtung
- 2: Umformungseinrichtung
- 4: Fülleinrichtung
- 10: Behältnis
- 10c: längere Seite des Behältnisses
- 12: Dreheinrichtung
- 13: Ausschleusstern
- 14: Ausrichteinheit
- 16: erstes Kontaktierungselement
- 16a: Innenwandung des ersten Kontaktierungselements
- 18: zweites Kontaktierungselement
- 32: Ausschleuseinrichtung
- 34: Schienenelemente
- 36: Schienenelemente
- 44: Haltedorn
- 46: Riemen
- 48: Antriebseinrichtung
- 53, 55: Rumpfstern
- 54,56: Ausnehmung
- 62: Sensoreinrichtung, Stangenschalter
- 64: Rutscheneinrichtung
- 65: Flaschenwagen
- 66: Einführbereich
- 68: Ausnehmung
- 74: Führungselement
- 75: Einführschräge des Führungselements 74
- 80: Rumpfstern
- 82: Ausnehmung
- L: Richtung
- P: Transportpfad der Behältnisse

## Patentansprüche

1. Vorrichtung (1) zum Herstellen von Kunststoffbehältnisse (10) mit nicht kreisförmigem Querschnitt mit einer Umformungseinrichtung (2), welche Kunststoffvorformlinge zu Kunststoffbehältnissen (10) umformt, mit einer in einer Transportrichtung der Kunststoffbehältnisse nach der Umformungseinrichtung (2) angeordneten Fülleinrichtung (4), welche die Kunststoffbehältnisse mit einer Flüssigkeit befüllt und mit einer Transporteinrichtung, welche die Kunststoffbehältnisse vereinzelt von der Umformungseinrichtung (2) in Richtung der Fülleinrichtung (4) entlang eines vorgegebenen Transportpfades (P) transportiert,
wobei
entlang des Transportpfades (P) eine Ausrichtungseinrichtung (12, 14) vorgesehen ist, welche die Kunststoffbehältnisse wenigstens teilweise hinsichtlich einer Drehstellung um deren Längsachse (L) ausrichtet,
wobei
die Ausrichtungseinrichtung eine Dreheinrichtung (12) aufweist, welche die Kunststoffbehältnisse jeweils um einen vorgegebenen Drehwinkel dreht, **dadurch gekennzeichnet, dass** die Ausrichtungseinrichtung eine Ausrichteinheit (14) aufweist, welche in der Transportrichtung der Kunststoffbehältnisse nach der Dreheinrichtung (12) angeordnet ist und welche die Kunststoffbehältnisse wenigstens teilweise hinsichtlich ihrer Längsrichtung (L) dreht, und dass
die Ausrichtungseinrichtung (12, 14) ein erstes Kontaktierungselement (16, 18) zum Ausrichten der Kunststoffbehältnisse (10) aufweist und das erste Kontaktierungselement (16, 18) die Kunststoffbehältnisse (10) zu deren Ausrichtung an deren Außenoberfläche kontaktiert, wobei die Kunststoffbehältnisse (10) vor und auch während dieser Ausrichtung mittels Greifelementen transportiert werden, wobei diese Greifelemente eine Relativdrehung dieser Behältnisse bezüglich den Greifelementen und bezüglich der Längsachse der Behältnisse erlauben, und wobei es sich bei diesem Greifelemente um steuerbare Greifelemente handelt, deren Öffnungs- und Schließstellung steuerbar ist.

2. Vorrichtung (1) nach Anspruch 1,
**dadurch gekennzeichnet, dass**
die Ausrichtungseinrichtung (12, 14) die Kunststoffbehältnisse (10) derart ausrichtet, dass diese nach Verlassen der Ausrichteinrichtung (12, 14) jeweils in der gleichen Drehstellung bezüglich ihrer Längsachse (L) ausgerichtet sind.

3. Vorrichtung (1) nach Anspruch 1,
**dadurch gekennzeichnet, dass**
die Ausrichteinheit (14) stationär gegenüber dem Transportpfad der Behältnisse (10) angeordnet ist.

4. Vorrichtung nach Anspruch 3,
**dadurch gekennzeichnet, dass**
sich ein Abstand zwischen einem Kontaktierungselement (16, 18) und dem Transportpfad (P) der Kunststoffbehältnisse (10) in der Transportrichtung der Kunststoffbehältnisse (10) wenigstens abschnittsweise verringert.

5. Vorrichtung nach zumindest einem der vorhergehenden Ansprüche,
**dadurch gekennzeichnet, dass**
die Vorrichtung eine Ausschleuseinrichtung (32) zum Ausschleusen von Behältnissen aufweist und diese Ausschleuseeinrichtung zwischen der Umformungseinrichtung (2) und der Fülleinrichtung (4) angeordnet ist.

6. Verfahren zum Herstellen von Kunststoffbehältnissen (10) mit nicht kreisförmigem Querschnitt mittels einer Vorrichtung (1) zum Herstellen von Kunststoffbehältnisse (10) nach einem der vorhergehenden Ansprüche, wobei Kunststoffvorformlinge mittels der Umformungseinrichtung (2) zu Kunststoffbehältnissen (10) umgeformt werden und hierzu die Kunststoffvorformlinge vereinzelt der Vielzahl von Blasstationen zugeführt werden, und wobei die gefertigten Kunststoffbehältnisse (10) mittels wenigstens einer Transporteinrichtung vereinzelt in Richtung der Fülleinrichtung transportiert werden, um von dieser Fülleinrichtung mit einem fließfähigen Medium befüllt zu werden,
wobei
die Kunststoffbehältnisse (10) nach Verlassen der Blasstationen hinsichtlich der Drehstellung um deren Längsachse (L) ausgerichtet werden.

## Claims

1. Device (1) for the production of plastics material containers (10) with non-circular cross-section with a forming device (2) which transforms plastics material preforms into plastics material containers (10), with a filling device (4) which is arranged after the transformation device (2) in a transport direction of the plastic containers and fills the plastic containers with a fluid, and with a transport device which transports the plastic containers individually from the transformation device (2) in the direction of the filling device (4) along a predefined transport path (P), wherein along the transport path is provided an alignment device (12, 14) which aligns the plastics material containers at least partially in relation to a rotary position about their longitudinal axis (L), wherein the alignment device has a rotation device (2) which rotates the plastics material containers each about a predefined rotary angle, **characterised in that** the alignment device has an alignment unit (14) which is arranged after the turning device (12) in the transport direction of the plastics material containers and which rotates the plastics material containers at least in part with regard to the longitudinal direction (L) thereof and that the alignment device (12, 14) has a first contact element (16, 18) for the alignment of the plastics material containers (10) and the first contact element (16, 18) contacts the plastics material containers (10) for the alignment thereof at their outer surface, wherein the plastics material containers (10) are transported by means of gripping elements before and also during this alignment, wherein these gripping elements allow for a relative turning of these containers relative to the gripping elements and relative to the longitudinal axis of the containers and wherein the gripping elements are controllable gripping elements, the opening and closing of which can be controlled.

2. Device (1) according to claim 1, **characterised in that** the alignment device (12, 14) aligns the plastics material containers (10) such that after leaving the alignment device (12, 14) they are each oriented in the same rotary position in relation to their longitudinal axis (L).

3. Device (1) according to claim 1, **characterised in that** the alignment unit (14) is arranged stationary in relation to the transport path of the containers (10).

4. Device (1) according to claim 3, **characterised in that** a distance between a contacting element (16, 18) and the transport path (P) of the plastics material containers (10) reduces at least in sections in the transport direction of the plastics material containers (10).

5. Device (1) according to at least one of the preceding claims, **characterised in that** the device has an ejection device (32) for ejecting containers and this ejection device is arranged between the transformation device (2) and the filling device (4).

6. Method for the production of plastics material containers (10) with non-circular cross-section by means of a device (1) for the production of plastics material containers (10) according to one of the preceding claims, wherein plastic preforms are transformed into plastics material containers (10) by means of a transformation device (2) and for this the plastics material preforms are supplied individually to the multiplicity of blowing stations and wherein the finished plastics material containers (10) are transported by means of at least one transport device individually in the direction of a filling device in order to be filled with a liquid medium by this filling device, wherein the plastic containers (10) after leaving the blowing stations are aligned in relation to a rotary position about their longitudinal axis (L).

## Revendications

1. Installation (1) pour la fabrication de récipients en matière plastique (10) à section transversale non circulaire, avec un dispositif de transformation (2) transformant des préformes en matière plastique en récipients en matière plastique (10), avec un dispositif de remplissage (4) situé en aval du dispositif de transformation (2) dans la direction de transport des récipients en matière plastique, lequel remplit les récipients en matière plastique avec un liquide et avec un dispositif de transport transportant les récipients en matière plastique séparés depuis le dispositif de transformation (2) vers le dispositif de remplissage (4) le long d'un chemin de transport (P) défini,
dans laquelle
un dispositif d'orientation (12, 14) est prévu le long du chemin de transport (P), lequel oriente au moins en partie les récipients en matière plastique relativement à une position de rotation autour de leur axe longitudinal (L),
dans laquelle
le dispositif d'orientation comprend un dispositif de rotation (12) qui tourne chaque récipient en matière plastique suivant un angle de rotation défini, **caractérisée en ce que**
le dispositif d'orientation comprend une unité d'ajustement (14) située en aval du dispositif de rotation (12) dans la direction de transport des récipients en matière plastique et qui tourne au moins en partie les récipients en matière plastique relativement à leur direction longitudinale (L), et **en ce que**
le dispositif d'orientation (12, 14) comprend un premier élément de contact (16, 18) pour l'orientation des récipients en matière plastique (10) et le premier élément de contact (16, 18) contacte les récipients en matière plastique (10) sur leur surface extérieure pour orientation, les récipients en matière plastique (10) étant convoyés au moyen d'éléments de préhension avant et aussi pendant ladite orientation, lesdits éléments de préhension permettant une rotation relative desdits récipients par rapport aux éléments de préhension et par rapport à l'axe longitudinal des récipients, et lesdits éléments de préhension étant des éléments de préhension pouvant être commandés, et dont la position d'ouverture et de fermeture peut être commandée.

2. Installation (1) selon la revendication 1,
**caractérisée en ce que**
le dispositif d'orientation (12, 14) oriente les récipients en matière plastique (10) de telle manière que ceux-ci sont orientés respectivement dans la même position de rotation par rapport à leur axe longitudinal (L) après avoir quitté le dispositif de rotation (12, 14).

3. Installation (1) selon la revendication 1,
**caractérisée en ce que**
l'unité d'ajustement (14) est fixe par rapport au chemin de transport des récipients (10).

4. Installation selon la revendication 3,
**caractérisée en ce**
**qu'**un espacement entre un élément de contact (16, 18) et le chemin de transport (P) des récipients en matière plastique (10) est au moins en sections diminué dans la direction de transport des récipients en matière plastique (10).

5. Installation selon au moins une des revendications précédentes,
**caractérisée en ce que**
ladite installation comporte un dispositif d'éjection (32) pour l'évacuation de récipients, et **en ce que** ledit dispositif d'éjection est situé entre le dispositif de transformation (2) et le dispositif de remplissage (4).

6. Procédé de fabrication de récipients en matière plastique (10) à section transversale non circulaire au moyen d'une installation (1) pour la fabrication de récipients en matière plastique (10) selon l'une des revendications précédentes, dans lequel des préformes en matière plastique sont transformées en récipients en matière plastique (10) au moyen du dispositif de transformation (2) et dans lequel les préformes en matière plastique sont à cet effet séparément conduites vers la pluralité de stations de soufflage, et dans lequel les récipients en matière plastique (10) finis sont séparément transportés vers le dispositif de remplissage au moyen d'au moins un dispositif de transport pour être remplis par ledit dispositif de remplissage avec un fluide apte à l'écoulement, les récipients en matière plastique (10) étant orientés relativement à leur position de rotation autour de leur axe longitudinal (L) après avoir quitté les stations de soufflage.
